(19) **Europäisches Patentamt**
European Patent Office
Office européen des brevets

(11) **EP 1 633 605 B1**

(12) **EUROPÄISCHE PATENTSCHRIFT**

(45) Veröffentlichungstag und Bekanntmachung des Hinweises auf die Patenterteilung:
**05.11.2008 Patentblatt 2008/45**

(21) Anmeldenummer: **04720524.0**

(22) Anmeldetag: **13.03.2004**

(51) Int Cl.:
**B60R 21/01** *(2006.01)*  **B60R 21/34** *(2006.01)*

(86) Internationale Anmeldenummer:
**PCT/DE2004/000509**

(87) Internationale Veröffentlichungsnummer:
**WO 2004/103778 (02.12.2004 Gazette 2004/49)**

(54) **VORRICHTUNG ZUR AUFPRALLERKENNUNG**

IMPACT DETECTION DEVICE

DISPOSITIF D'IDENTIFICATION DE COLLISION

(84) Benannte Vertragsstaaten:
**DE ES FR GB SE**

(30) Priorität: **12.05.2003 DE 10321160**

(43) Veröffentlichungstag der Anmeldung:
**15.03.2006 Patentblatt 2006/11**

(73) Patentinhaber: **ROBERT BOSCH GMBH**
**70442 Stuttgart (DE)**

(72) Erfinder: **DUKART, Anton**
**70839 Gerlingen (DE)**

(56) Entgegenhaltungen:
**EP-A- 0 995 639  WO-A-01/15109**
**GB-A- 2 317 707  US-B1- 6 329 910**
**US-B2- 6 534 999**

**Beschreibung**

Stand der Technik

Die Erfindung geht aus von einer Vorrichtung zur Aufpralldetektion nach der Gattung des unabhängigen Patentanspruchs.

Aus WO 01/98117 A1 ist es bekannt, einen Fußgängeraufprall durch verursachte Drücke oder Verformungen und Beschleunigungen zu ermitteln.

Aus EP 0 995 639 A2 ist es bekannt, ein Piezo-Kabel als Aufprallsensor zu verwenden. Dabei wird das Piezo-Kabel als Seitenaufprallsensor verwendet, wobei das Kabel dann ein Aufprallsignal abgibt, wenn das Kabel einer entsprechenden mechanischen Spannung unterliegt. Eine kapazitive Messung wird zur Diagnose des Kabels verwendet.

Vorteile der Erfindung

Die erfindungsgemäße Vorrichtung zur Aufpralldetektion mit den Merkmalen des unabhängigen Patentanspruchs hat demgegenüber den Vorteil, dass nunmehr ein Piezo-Kabel zur Aufpralldetektion verwendet wird. Dieses Piezo-Kabel bietet den Vorteil, dass es verschiedenste Messprinzipien alleine oder in Kombination ermöglicht. Darüber hinaus ist ein Piezo-Kabel in seiner Funktion sehr zuverlässig und einfach.

Durch die in den abhängigen Ansprüchen aufgeführten Maßnahmen und Weiterbildungen sind vorteilhafte Verbesserungen der im unabhängigen Patentanspruch angegebenen Vorrichtung zur Aufpralldetektion möglich.

Besonders vorteilhaft ist, dass das Piezo-Kabel bis zu vier unabhängigen Messprinzipien zur Aufpralldetektion verwenden kann. Dazu zählt eine kapazitive Messmethode, um ein Aufprallobjekt bezüglich seiner relativen Dielektrizitätskonstante zu charakterisieren. Damit ist eine einfache Unterscheidung zwischen einem Menschen und einem

Gegenstand möglich. Eine zweite Messung kann durch den piezoelektrischen Effekt erfolgen. Hierbei führt ein Aufprall zu einem piezoelektrischen Impuls, der registrierbar ist. Durch die Auswertung von Laufzeitunterschieden ist dann insbesondere auch der Aufprallort detektierbar. Dies kann beispielsweise mittels einer Verzögerungsleitung erreicht werden. Diese Verzögerungsleitung kann vorzugsweise durch einen Schirm, der als ein gewickelter Draht ausgebildet wird, erreicht werden.

Eine weitere vorteilhafte Messmethode, die mit dem Piezo-Kabel möglich ist, ist durch die Dehnung des Kabels bei einem Aufprall gegeben. Die Dehnung ruft eine Widerstandsänderung hervor, die messbar ist und somit zur Aufpralldetektion nutzbar ist. Als vierte Messmethode ist eine induktive Messung möglich, wenn ein Schirm des Piezo-Kabels induktiv ausgebildet ist. Damit kann die Leitfähigkeit des Aufprallobjekts charakterisiert werden. Auch dies ermöglicht es, eine Person von einem Gegenstand zu unterscheiden und auch Gegenstände zu charakterisieren.

Für die kapazitive Messung kann das Piezo-Kabel einen weiteren Schirm aufweisen, der als Elektrode zur Erfassung der Kapazitätsänderung dient. Dieser Schirm kann zylindrisch oder halbzylindrisch ausgebildet sein. Damit ist eine Verstärkung der Richtwirkung möglich. Die elektrischen Felder des Kabels sind dabei in den Bereich des Aufpralls gerichtet. Durch diese Richtwirkung wird insbesondere das Signal-Rauschverhältnis verbessert.

Weiterhin ist es von Vorteil, dass das Signal, das die Widerstandsänderung charakterisiert, auf eine höhere Frequenz umgesetzt wird, um andere Messungen nicht zu stören. Damit ist eine sehr einfache Separation der Messungen möglich.

Darüber hinaus ist es von Vorteil, dass das Piezo-Kabel in einer Verkleidung einer Stoßstange angeordnet ist. Dabei kann das Piezo-Kabel vorteilhafterweise in die Verkleidung eingespritzt sein oder eingeklemmt.

Zeichnung

Ausführungsbeispiele der Erfindung sind in der Zeichnung dargestellt und werden in der nachfolgenden Beschreibung näher erläutert.

Es zeigen

Figur 1 ein erstes Blockschaltbild der erfindungsgemäßen Vorrichtung,
Figur 2 eine schematische Darstellung der erfindungsgemäßen Vorrichtung,
Figur 3 eine schematische Darstellung zur Erläuterung der Kapazitätsmessung,
Figur 4 ein zweites Blockschaltbild der erfindungsgemäßen Vorrichtung,
Figur 5 ein drittes Blockschaltbild der erfindungsgemäßen Vorrichtung,
Figur 6 ein viertes Blockschaltbild der erfindungsgemäßen Vorrichtung und
Figur 7 eine Darstellung der Befestigung des Piezo-Kabels.

Beschreibung

Basierend auf einer freiwilligen Selbstverpflichtung der ACEA (Europäische Automobilhersteller) wird in Europa eine gesetzliche Regelung für den Fußgängerschutz eingeführt.

Eine erste Stufe ist ab 2005 gültig. Die darin geforderten Grenzwerte sind voraussichtlich mit rein passiven Maßnahmen zu erfüllen, das ist die Formgebung und Polsterung des Fahrzeugfrontendes.

Die zweite Stufe soll ab 2010 gültig sein und wird wesentlich höhere Anforderungen stellen. Hier werden für die meisten Fahrzeuge aktive Systeme zur Erfüllung der Grenzwerte notwendig sein. Es wächst demnach der Druck, ein aktives System auf dem Markt einzuführen.

Es existieren im Bereich der Aktuatorik als auch der Sensorik verschiedene Konzepte. Im Bereich der Sensorik sind vorwiegend Kontaktsensoren, die in der Stoßstange verbaut sind, angedacht. Diese, basierend auf Kraftmessung oder Verformungsänderung, können sich über die gesamte Breite der Stoßstange erstrecken. Beispiele für solche Kraftsensoren sind eine Piezo-Folie, Dehnmessstreifen, Lichtsensoren oder Sensoren aus Komposit. Bei Verformungssensoren handelt es sich zum Teil um Lichtleiter oder einfache Kontaktschalter. Im Weiteren besteht die Möglichkeit, direkt an der sogenannten "Crash-Box" verschiedene Beschleunigungs- oder kraftmessende Sensoren anzubringen.

Im Weiteren sind auch vorausschauende Sensoren angedacht, wie z. B. radarbasierte oder Videosensoren, die einen Fußgänger anhand der reflektierten Signale bzw. über eine Bildauswertung erkennen.

Für den Schutz der Fußgänger werden im Wesentlichen Airbagsysteme in den Motorraum integriert oder aber die Motorhaube angehoben, um dem Aufprall der Person entsprechend entgegenzuwirken.

Die Kontaktsensoren können im allgemeinen nicht eine Mülltonne oder Laterne von einem Fußgänger unterscheiden. Dies ist aber der größte Nachteil aller bisher vorgestellten Sensoren zur Aufprallerkennung. Somit würde fast bei jedem Rempler ein zusätzlicher Schaden durch die pyroelektrisch betätigte Motorhaubenanhebung oder auch der einer Airbagauslösung entstehen.

Die Störanfälligkeit im Bereich der Crash-Box ist sehr hoch, da hier ein hohes Maß an Fahrzeugschwingungen übertragen wird und so ein Fußgängeraufprall aufwändig detektiert werden muss. Außerdem besitzen nicht alle Fahrzeuge eine integrierte Crash-Box. Unter Crash-Box wird hier eine Crash-Stoßenergieabsorbierende Einrichtung, die den Insassen vor Unfällen schützt, verstanden.

Erfindungsgemäß wird ein einfaches Sensierungskonzept für den Fußgängerschutz vorgeschlagen, das einerseits durch den einfachen Aufbau eine sehr kostengünstige Lösung darstellt und andererseits deutlichere Störunempfindlichkeit durch die Kombination der gleichzeitig ausgewerteten elektromagnetischen Felder aufweist.

Heutige Stoßstangen unterscheiden sich aufgrund einiger gesetzlicher Bestimmungen zum Mindestgeschwindigkeitsaufprall ohne Beschädigung, zum Fußgängerschutz und insbesondere infolge der Designrandbedingungen deutlich von ihren Vorgängern. Der metallische Stoßfänger, wo bei einem starken Unfall die Verformungsenergie abgebaut wird, ist an den Längsträgern des Fahrzeugs angeschweißt. Mit einer federnden Anbindung über Elemente ist ein Kunststoffprofil an dem Stoßfänger mittels Schraubstiften befestigt. Die Kunststoffverkleidung ist durch die Pralldämpfer-Styropor- oder Schaumstoffelemente am Chassis und dem Kunststoffprofil befestigt. Der Stoß an der Verkleidung ist somit stark abgedämpft und wird verzögert an den Stoßfänger weitergegeben. Die empfindlichste, einfachste, universellste Stelle für den Einbau der Sensoren befindet sich in der Verkleidung, die in jedem Fahrzeug vorhanden ist.

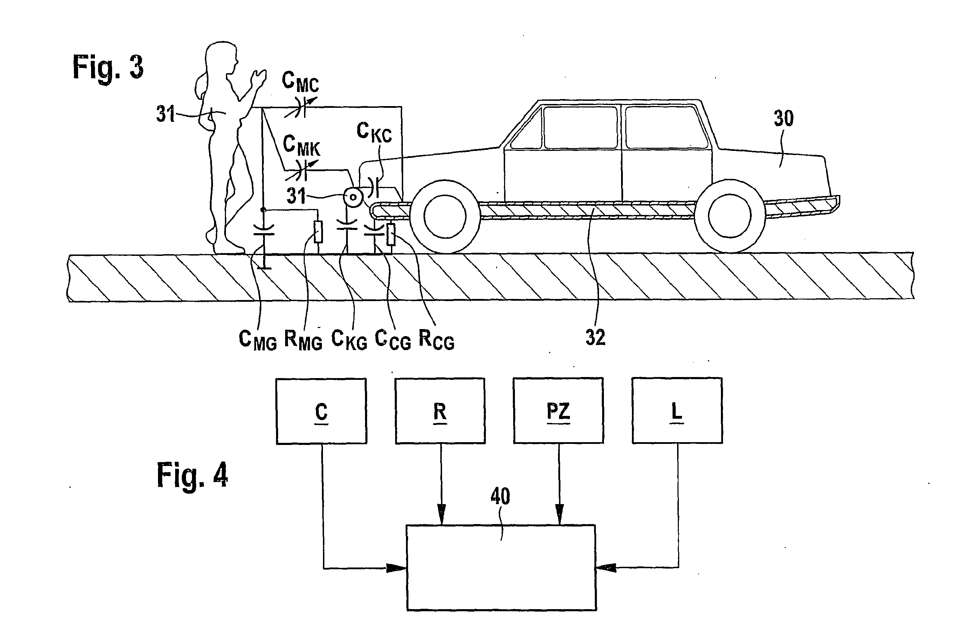

Die Stoßstangenverkleidung besitzt bereits heute einige eingespritzte Einlegeteile. Spritzt man in diese Verkleidung ein modifiziertes Piezo-Kabel ein, so kann daraus noch vor der Precrash-Berührung kapazitiv erkannt werden, ob sich ein Mensch mit einer relativen Dielektrizitätskonstante $\varepsilon_r = 80$ oder ein leitfähiges Metallteil bzw. eine Mülltonne u.s.w. nähert. Das erste Messprinzip, zu dem das Piezo-Kabel demnach fähig ist, ist die Messung der Kapazitätsänderung, wie es in Figur 3 verdeutlicht ist. Ein Fahrzeug 30 weist am Chassis 32 im Bereich der Stoßstange ein Piezo-Kabel 31 auf. Dieses Piezo-Kabel weist einen Schirm als Elektrode für die Kapazitätsauswertung auf, wobei der Schirm entweder zylindrisch oder als Halbzylinder sich über den Leiter erstrecken kann. Damit wird die Richtwirkung noch etwas verstärkt. In Figur 3 sind zur Person 31 die verschiedenen Kapazitäten aufgezeichnet, die zwischen der Person, hier mit N gekennzeichnet, und den verschiedenen Fahrzeugelementen auftreten. Die Kapazität CMC tritt zwischen dem Menschen und dem Chassis auf, während die Kapazität CMK zwischen dem Menschen und dem Kabel auftritt. Zwischen dem Kabel und dem Chassis ist die Kapazität CKC festzustellen, während zwischen dem Menschen und dem Erdboden die Kapazität CMG vorliegt. Parallel zur Kapazität CMG ist der Widerstand RMG festzustellen. Zwischen dem Kabel und dem Erdboden ist die Kapazität CKG und zwischen dem Chassis und dem Erdboden die Kapazität CCG sowie parallel dazu ein Widerstand RCG vorliegen. Durch den Abstand werden die Kapazitäten CMC und CMK variiert. Die Kapazitäten sind insbesondere abhängig von der relativen Dielektrizitätszahl, die insbesondere beim Menschen durch dessen Wassergehalt bestimmt ist. Beim Menschen ist diese relativen Dielektrizitätszahl $\varepsilon_r = 80$. Diese Kapazitätsmessung kann eine Reichweite von mehr als 20 cm haben, je nachdem, wie die Elektroden ausgelegt sind und die Empfindlichkeit eingestellt ist. Dabei wird das Potenzial auf dem Schirm gegen Masse gemessen, verstärkt, gleichgerichtet und über einen Bandpass sowie Komparator einer Auswertung zugeführt. Durch Vergleich mit abgespeicherten Werten, die aus Versuchen bzw. Simulationen und analytischen Rechnungen bestimmt wurden, kann dann die relative Dielektrizitätszahl bestimmt werden. Die Impedanzänderung von CMC und CMK wird also durch eine Annäherung von einem leitfähigen oder wässrigen Element verursacht, wobei der Verlustfaktor die beiden Fälle voneinander unterscheiden lässt. Die Impedanz setzt sich wie folgt zusammen:

$Z = Rp + i/(j\omega Cp)$. Der Verlustfaktor ist das Verhältnis $Rp/\omega Cp$. Durch den Verlustfaktor wird für Kondensatoren ausgedrückt, dass die Isolation der beiden Flächen nicht optimal ist.

Das Piezo-Kabel ist als Koaxialkabel ausgeführt und weist einen polarisierten Kernisolator auf, der bei einem Stoßimpuls ein Ladungssignal abgibt. Es liegt hiermit also ein piezoelektrischer Impuls vor. Dieses Signal wird dann über einen Ladungsverstärker, gefolgt von einem Bandpass und Komparator, ausgewertet. Die Ortsauflösung des Stoßes erhält man durch die Laufzeitdifferenz des örtlich induzierten piezoelektrischen Impulses. Dieser läuft einerseits direkt in einen Piezo-Kabelverstärker, andererseits in Gegenrichtung zu einem Abschlusswiderstand des Piezo-Kabels und wird dort reflektiert und gelangt in Abhängigkeit der Fortpflanzungsgeschwindigkeit an den Eingang der Piezo-Kabelauswertung. Ein Schirm stellt dabei einen gewickelten Draht dar mit einer Induktivität von

$$L := \frac{\pi \cdot D^2}{4 \cdot l} \cdot n^2 \cdot \mu_r \cdot \mu_0 ,$$

wobei 1 die Länge des Leiters ist, D der Wicklungsdurchmesser, $\mu_r$ die relative Permeabilität und n die Wicklungszahl und der Kapazität

$$C := \frac{(2 \cdot \pi \cdot \varepsilon_r \cdot \varepsilon_0 \cdot l)}{\ln\left(\dfrac{D}{d}\right)} ,$$

sodass die Fortpflanzungsgeschwindigkeit $v = \dfrac{1}{\sqrt{l*c}}$ sich gegenüber der Lichtgeschwindigkeit um einen Faktor von ca. 120 verändert. Die Verzögerungszeit errechnet sich zu t = 0,4 $\mu$s/m. Die Zeitdifferenz zwischen dem ersten und dem darauffolgenden Impuls gibt die Auskunft über den Ort des Aufpralls.

Als dritter Effekt wird die Längenänderung der Kabelseele, also des Innenleiters, als dynamischer Dehnungsmessstreifen benutzt, der beim Aufprall seine Länge und somit auch seinen Widerstand verändert. Für die Auswertung verwendet man zweckmäßigerweise ein Trägerfrequenzsignal, das das Piezo-Signal nicht mehr stören kann, weil es in einem höheren Frequenzbereich liegt. Schließlich kann durch die induktive Ausbildung des Schirms ein weiterer Effekt bei der Annäherung des Objekts an das Piezo-Kabel ausgenutzt werden. Die Unterscheidung von gut leitfähigen Objekten, z. B. einem Autoblech oder Fahrrad und weniger leitfähigen Objekten wie einem Menschen oder Kunststoffen kann durch so ein induktives Kabel erfolgreich vorgenommen werden.

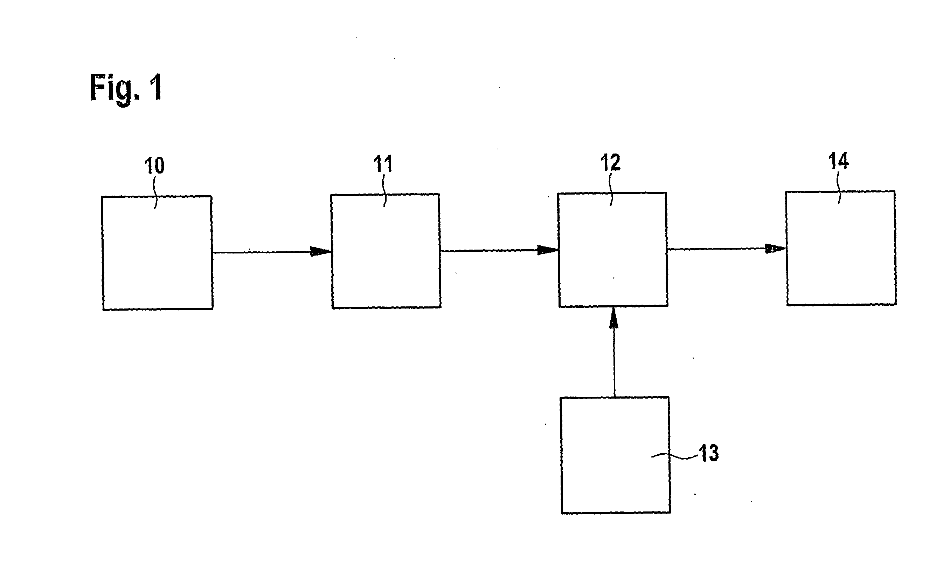

Figur 1 zeigt in einem Blockschaltbild die erfindungsgemäße Vorrichtung. Das Piezo-Kabel 10 ist über eine Leitung mit einer Auswertung 11 verbunden. Die Auswertung 11 ermittelt die am Piezo-Kabel konfigurierten Messprinzipien, die oben dargestellt wurden. Entweder nur eins oder eine Kombination von diesen, wobei auch alle vier Messprinzipien zur Anwendung kommen können. Das Signal in Abhängigkeit von der Auswertung übersendet dann die Auswertung 11 einem Steuergerät für Rückhaltesysteme 12. Das Steuergerät für Rückhaltesysteme 12 erhält noch weitere Signale von einer weiteren Sensorik 13, wie beispielsweise einer Innenraumsensorik oder anderen Aufprallsensoren wie Beschleunigungssensoren. Auch Precrash-Sensoren können der Sensorik 13 zugeordnet sein. Weiterhin weist das Steuergerät 12 selbst auch Sensoren, insbesondere Beschleunigungssensoren, auf, um selbst einen Aufprall zu registrieren und/oder eine Plausibilisierung von Aufprallsignalen von einer externen Sensorik durchzuführen. Das Steuergerät 12 weist einen Prozessor auf, auf dem ein Auslösealgorithmus für Rückhaltemittel abläuft. Diesem Algorithmus werden die Sensorsignale eingespeist, um dann in Abhängigkeit von der Auswertung des Algorithmus Rückhaltemittel 14 anzusteuern. Diese Rückhaltemittel 14 betreffen Rückhaltemittel in der Fahrgastzelle, also Airbags und Gurtstraffer, sowie Rückhaltemittel zum Schutz von Fußgängern wie Außenairbags oder beispielsweise die anhebbare Fronthaube.

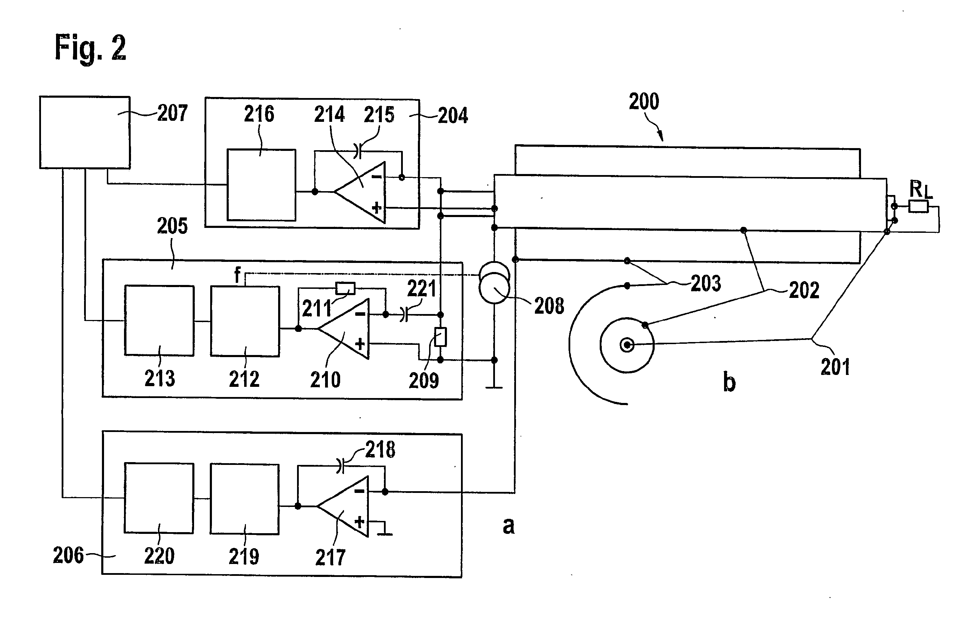

Figur 2 zeigt in einer schematischen Darstellung die genaue Auswertung von drei Messprinzipien, die am Piezo-Kabel konfiguriert sind. Hier werden der piezoelektrische Effekt ausgenutzt, die Dehnung des Piezo-Kabels und die kapazitive Auswertung. In Figur 2a ist dies über ein Blockschaltbild illustriert und in Figur 2b wird in einem Schnitt durch das Piezo-Kabel der Aufbau gezeigt. Figur 2b und Figur 2a zeigen jeweils eine Seele 201, also den Innenleiter, der von einem inneren Schirm 202 umgeben ist, der zur piezoelektrischen Messung dient, wobei dieser innere Schirm 202 von einem weiteren Schirm 203 umgeben ist, der zur kapazitiven Messung dient. Der innere Schirm 202 kann alternativ auch durch eine induktive Ausbildung zur induktiven Messung genutzt werden, um über die Leitfähigkeit ein Aufprallobjekt zu charakterisieren. Ein Widerstand RL verbindet die Seele 201 mit dem inneren Schirm 202. Dieser ist ca. 1000mal größer aks die Kabelimpedanz, die bei 75$\Omega$ liegt, zu wählen, um einen möglichst großen Reflexionskoeffizienten zu erhalten.

Im Blockschaltbild ist dargestellt, dass der innere Leiter 201 zum einen mit einer Piezo-Kabelauswertung 204 und zum anderen mit einer Widerstandsauswertung 205 verbunden ist. Dabei ist in der Piezo-Kabelauswertung 204 der Innenleiter zum einen mit einem negativen Eingang eines Operationsverstärkers 214 und einem Kondensator 215 verbunden und zum anderen in der Widerstandsauswertung 205 mit einem Kondensator 221 und einem Widerstand 209. Der innere Schirm 202 ist zum einen mit dem positiven Eingang des Operationsverstärkers 214 und zum anderen mit einem Frequenzumsetzer 208 verbunden. Der äußere Schirm 203 ist mit einer Kapazitätsauswertung 214 verbunden und dabei mit einem Kondensator 218 und dem invertierenden Eingang eines Operationsverstärkers 217. Der nicht invertierende Eingang des Operationsverstärkers 217 ist gegen Masse geschaltet. Die andere Seite des Kondensators 218 ist mit dem Ausgang des Operationsverstärkers 217 verbunden und einem phasenempfindlichen Gleichrichter 219. Hier wird die im Widerstand 209 abfallende Spannung phasensynchron zu der Signalquelle 208 demoduliert, d.h. mit +1 oder -1 multipliziert.

Der phasenempfindliche Gleichrichter 219 ist mit einem Bandpass und einem Komparator 220 verbunden. Der Block 220 ist dann über seinen Ausgang mit einer Logik und einem Entscheidungsalgorithmus 207 verbunden. Hier erfolgt die Auswertung des Blocks 11. Der Frequenzumsetzer 208 setzt das Signal auf dem Schirm 202 auf eine höhere Frequenz um und ist einerseits mit Masse und andererseits mit dem Widerstand 209 und dem nicht invertierenden Eingang des Operationsverstärkers 210 verbunden. Die andere Seite des Kondensators 221 ist zum einen mit dem invertierenden Eingang des Operationsverstärkers 210 und dem Widerstand 211 verbunden. Der Widerstand 211 dient wieder als Rückkopplungswiderstand und ist daher auf der anderen Seite mit dem Ausgang des Operationsverstärkers 210 verbunden. Auf den Operationsverstärker 210 folgen dann wiederum ein phasenempfindlicher Gleichrichter 212 und ein Bandpass und Komparator 213, die dann an die Logik 207 angeschlossen sind. Der Kondensator 215 dient als Rückkopplungskondensator bzw. stellt er mit dem Operationsverstärker 214 einen Ladungsverstärker dar. An diesen schließen sich dann ein Bandpass und Komparator 216 an, die wiederum mit der Logik 207 verbunden sind. Diese legen die Meßbandbreite und die Auslöseschwelle des jeweiligen Sensors fest.

Figur 4 zeigt in einem Blockschaltbild die erfindungsgemäße Vorrichtung. Eine kapazitive Auswertung C, eine Widerstandsänderung durch Längenänderung R, eine Messung des piezoelektrischen Impulses Pz und eine induktive Messung L wie oben angegeben sind mit einer Auswertung 40 verbunden. Hier werden also alle vorgesteuerten Messprinzipien durch das erfindungsgemäße Piezo-Kabel verwirklicht, sodass mit einer sehr hohen Sicherheit das Aufprallobjekt identifiziert und der Aufprallort bestimmt werden können.

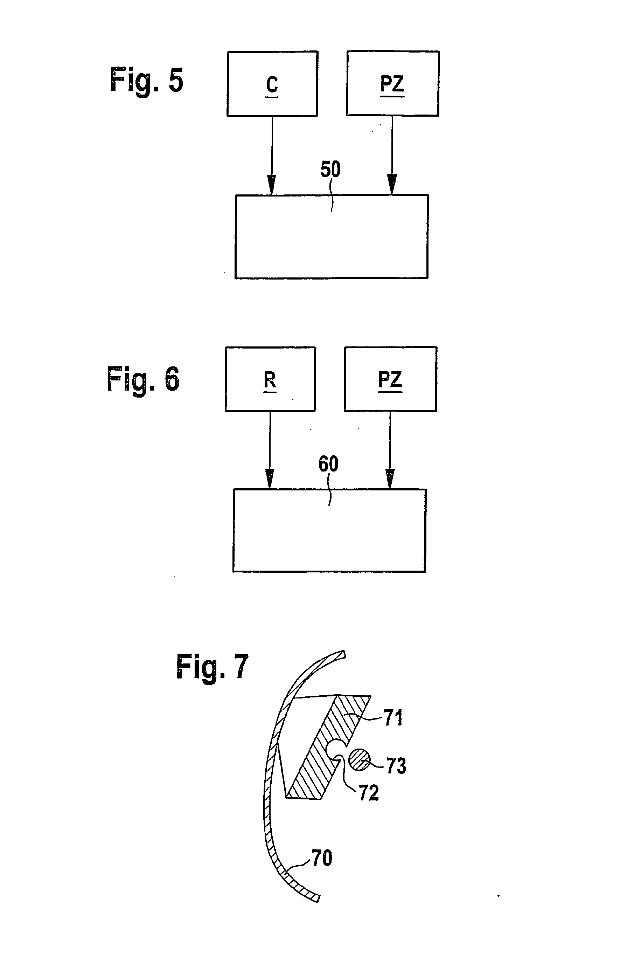

Figur 5 zeigt eine Konfiguration der erfindungsgemäßen Vorrichtung, in der lediglich die kapazitive Messung C und die piezoelektrische Messung Pz vorhanden sind und mit einer Auswertung 40 verbunden sind. Figur 6 zeigt die Kombination der Widerstandsmessung R und der piezoelektrischen Messung Pz, die mit der Auswertung 60 verbunden sind. Weitere Kombinationen sind hier möglich.

Figur 7 erläutert den Einbau des Piezo-Kabels in der Stoßstange. In Figur 7 ist eine Explosionsdarstellung des Befestigungsorts des Kabels dargestellt. Eine Stoßstange 70 weist einen Befestigungsbereich 71 auf, in dem sich eine Halterung für das Kabel 73 befindet.

Das Kabel kann dabei entweder eingespritzt sein in die Stoßstangenverkleidung oder eingeklemmt.

Nutzt man das Piezo-Kabel, um die vier unabhängigen Effekte auszunutzen, die durch vier unterschiedliche physikalische Effekte entstehen, die die Piezoelektrizität, die Feldveränderung des elektrischen Feldes bei der Kapazitätsmessung, die Feldveränderung bei der Induktivität und die Widerstandsänderung über die Veränderung der Piezoresistivität des Innenleiters, so kann sowohl durch Plausibilitätsbetrachtung der Fußgänger von den übrigen Objekten zuverlässig unterschieden werden, es können die Messeffekte gleichzeitig ausgewertet werden, wobei der induktive oder kapazitive Sensor bereits vor der Berührung mit der Stoßstange ansprechen und deshalb als Triggerung für die piezoelektrische und piezoresistive Messung genutzt werden können.

## Patentansprüche

1. Vorrichtung zur Aufpralldetektion, wobei die Vorrichtung zur Aufpralldetektion wenigstens ein Piezo-Kabel (10, 200) aufweist, **dadurch gekennzeichnet, dass** das Piezo-Kabel (10, 200) derart konfiguriert ist, dass die Vorrichtung mittels des Piezo-Kabels (10, 200) eine Kapazitätsänderung durch ein Aufprallobjekt (31) erkennt und dass ein Ansprechen vor dem Aufprall des Piezo-Kabels bezüglich der Kapazitätsänderung als Triggerung für eine piezoelektrische und piezoresistive Messung genutzt wird.

2. Vorrichtung nach Anspruch 1, **dadurch gekennzeichnet, dass** das Piezo-Kabel (10, 200) einen ersten Schirm (202) als eine Elektrode zur Erfassung der Kapazitätsänderung aufweist.

3. Vorrichtung nach Anspruch 2, **dadurch gekennzeichnet, dass** der erste Schirm (202) zylindrisch oder halbzylindrisch ausgebildet ist.

4. Vorrichtung nach einem der vorhergehenden Ansprüche, **dadurch gekennzeichnet, dass** das Piezo-Kabel (10, 200) derart konfiguriert ist, dass ein Aufprall einen piezoelektrischen Impuls hervorruft.

5. Vorrichtung nach Anspruch 4, **dadurch gekennzeichnet, dass** die Vorrichtung derart konfiguriert ist, dass die Vorrichtung mittels einer Laufzeitdifferenzmessung eine Ortsauflösung des Aufpralls erreicht.

6. Vorrichtung nach Anspruch 5, **dadurch gekennzeichnet, dass** der piezoelektrische Impuls einerseits direkt ausgewertet wird und andererseits über eine Verzögerungsleitung einer Auswertung zugeführt wird, um daraus die Laufzeitdifferenz zu ermitteln.

**7.** Vorrichtung nach Anspruch 6, **dadurch gekennzeichnet, dass** als Verzögerungsleitung ein zweiter Schirm (203) vorgesehen ist, der als ein gewickelter Draht ausgebildet ist.

**8.** Vorrichtung nach einem der vorhergehenden Ansprüche, **dadurch gekennzeichnet, dass** das Piezo-Kabel (10, 200) derart konfiguriert ist, dass es bei einem Aufprall eine Längenänderung erfährt, die eine Widerstandsänderung hervorruft.

**9.** Vorrichtung nach Anspruch 8, **dadurch gekennzeichnet, dass** ein die Widerstandsänderung charakterisierendes Signal auf eine höhere Frequenz zur Auswertung umgesetzt wird.

## Claims

**1.** Device for detecting impacts, wherein the device for detecting impacts has at least one piezo cable (10, 200), **characterized in that** the piezo cable (10, 200) is configured in such a way that the device detects a change in capacitance due to an impact object (31) by means of the piezo cable (10, 200), and **in that** a response before the impact of the piezo cable with respect to the change in capacitance is used as a trigger for a piezo-electric and piezo-resistive measurement.

**2.** Device according to Claim 1, **characterized in that** the piezo cable (10, 200) has a first screen (202) as an electrode for sensing the change in capacitance.

**3.** Device according to Claim 2, **characterized in that** the first screen (202) is of cylindrical or semi-cylindrical design.

**4.** Device according to one of the preceding claims, **characterized in that** the piezo cable (10, 200) is configured in such a way that an impact brings about a piezo-electric impulse.

**5.** Device according to Claim 4, **characterized in that** the device is configured in such a way that the device achieves a local resolution of the impact by means of a measurement of the transit time differential.

**6.** Device according to Claim 5, **characterized in that** the piezo-electric impulse is, on the one hand, evaluated directly and, on the other hand, is fed via a delay line to an evaluation means in order to determine the transit time differential therefrom.

**7.** Device according to Claim 6, **characterized in that** a second screen (203) which is embodied as a wound wire is provided as delay line.

**8.** Device according to one of the preceding claims, **characterized in that** the piezo cable (10, 200) is configured in such a way that in the event of an impact it experiences a change in length which brings about a change in resistance.

**9.** Device according to Claim 8, **characterized in that** a signal which characterizes the change in resistance is converted to a higher frequency for the purpose of evaluation.

## Revendications

**1.** Dispositif de détection de collision comprenant au moins un câble piézoélectrique (10, 200), **caractérisé en ce que** le câble piézo-électrique (10, 200) est configuré pour que le dispositif reconnaisse une variation de capacité produite par un objet de collision (31) à l'aide du câble piézo-électrique (10, 200), et on utilise la sollicitation avant la collision du câble piézo-électrique par rapport à la variation de capacité comme déclenchement d'une mesure piézo-électrique et piézorésistante.

**2.** Dispositif selon la revendication 1, **caractérisé en ce que** le câble piézo-électrique (10, 200) comporte un premier écran (202) comme électrode pour saisir la variation de capacité.

**3.** Dispositif selon la revendication 2, **caractérisé en ce que** le premier écran (202) est de forme cylindrique ou semi-cylindrique.

**4.** Dispositif selon les revendications précédentes, **caractérisé en ce que** le câble piézo-électrique (10, 200) est configuré pour qu'une collision provoque une impulsion piézo-électrique.

**5.** Dispositif selon la revendication 4, **caractérisé en ce que** le dispositif est configuré pour lui permettre d'assurer à l'aide d'une mesure de différence de temps de parcours, une résolution de localisation de la collision.

**6.** Dispositif selon la revendication 5, **caractérisé en ce que** l'impulsion piézo-électrique est d'une part exploitée directement et d'autre part transmise à un moyen d'exploitation par l'intermédiaire d'une ligne de retard pour déterminer ainsi une différence de temps de parcours.

**7.** Dispositif selon la revendication 6,

**caractérisé en ce que**
la ligne de retard est un second écran (203) réalisé sous la forme d'un fil enroulé.

8. Dispositif selon les revendications précédentes, **caractérisé en ce que**
le câble piézo-électrique (10, 200) est configuré pour subir une variation de longueur sous l'effet d'une collision, variation qui provoque une variation de résistance.

9. Dispositif selon la revendication 8, **caractérisé en ce qu'**
un signal caractérisant la variation de résistance est converti à une fréquence supérieure pour son exploitation.

**Fig. 1**

10  11  12  14

13

Fig. 2

## Fig. 3

$C_{MC}$

$C_{MK}$

$C_{KC}$

31

31

$C_{MG}$ $R_{MG}$ $C_{KG}$ $C_{CG}$ $R_{CG}$

30

32

## Fig. 4

| C | R | PZ | L |
|---|---|----|---|

40

EP 1 633 605 B1

Fig. 5

C      PZ

50

Fig. 6

R      PZ

60

Fig. 7

71

73

72

70

**EP 1 633 605 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0198117 A1
- EP 0995639 A2